# EUROPEAN PATENT APPLICATION

(11) **EP 4 838 728 A1**
(43) Date of publication of application: **11.11.2026**
(21) Application number: 26174526.9
(22) Date of filing: 24.04.2026
(51) Int. Cl.: H02G 3/08

(54) **CABLE LEADTHROUGH DEVICE**

(30) Priority: 08.05.2025 IT 202500010362
(71) Applicant: CEMBRE S.p.A., 25135 Brescia (IT)
(72) Inventor: BAREZZANI, Gualtiero, 25135 BRESCIA (IT); DELL'AMICO, Giulio, 25135 BRESCIA (IT); SCALVINI, Marco, 25135 BRESCIA (IT); ZANARDELLI, Roberto, 25135 BRESCIA (IT)
(74) Representative: Leihkauf, Steffen Falk

(57) **Abstract**

A cable leadthrough device (1) made of elastomeric material for mounting on an application wall (5) at a mounting opening. The device comprises a support plate (2) with a mounting side (4) and a visible side (6), one or more passage seats (7) with perforable walls (12) for cables, a peripheral abutment edge (11), formed integrally with the support plate (2) and intended to abut against the application wall (5), an insertion portion (14) projecting from the abutment edge (11) towards the mounting side (4), and a retaining groove (13) around the insertion portion (14) for embracing the edge (16) of the opening of the application wall (5). The abutment edge (11) forms a frame with first portions (11') having a first width (W11') and second portions (11") opposite and transverse, having a second width (W11") greater than the first width (W11'), wherein each second portion (11") is inclined towards the mounting side (4).

## Description

The present invention relates to a cable leadthrough device mountable to an application wall, for example of an electrical cabinet or a machinery, at a passage opening through which electrical cables or signal cables or fluid pipes must be led, in an orderly and firm manner, such as to ensure a desired degree of sealing and to prevent the risk of damage and undesired movements of the cables themselves.

Different solutions are known adapted to allow the passing through of cables through walls, for the purpose of ensuring a certain degree of fixing of the cables and of sealing of the crossing region.

Document DE102008028278B4 describes a cable leadthrough device comprising a plate made of soft plastic material, provided with membrane elements. Such membrane elements are designed to be perforated by an end of the cable to be passed through and to be fixed. DE1 02008028278B4 further describes the combination of the membrane elements with an extension having a cup shape, also provided with a perforable or open base that adheres to the cable after perforation, achieving a fixing in two points spaced axially. The fixing of the device to the application wall occurs by means of screws or gluing. The sealing and the resistance to extraction of the cable depend on the characteristics of the material of the cable leadthrough device and on the dimensions of the perforated elements and of the cables. Seals are also described for improving the sealing against the application wall.

Document EP2106006B1 describes a cable leadthrough device for a housing wall made as a flat plate in insulating material with areas pre-marked as programmed perforation points for the passing through of the cables. An outer edge of the plate forms a peripheral sealing flange. The cable leadthrough device is designed to be inserted into an opening of the application wall and fixed by snap engagement or screwing. To each pre-marked area there is associated a strain relief bracket having a wing shape that acts automatically on the cable during insertion, providing a mechanical fixing of the cable against extraction. The fixing of the cable leadthrough device to the application wall occurs by means of elastic wings or integrated snap hooks.

The solutions of the prior art are not yet completely free from drawbacks, in particular:
Complexity of the mould and of the moulding procedure: The presence of multiple elements and edges with curved geometries, brackets having complex wing shapes, double perforable walls spaced from one another, make costly and complex the making of the mould for forming the cable leadthrough devices. The moulding procedure of the elastomeric material and the extraction from the mould of the moulded elastomeric body are laborious.

Deposit of dust between the cable leadthrough device and the wall: The known solutions do not ensure in every condition of use a complete sealing between the outer edges of the elastomeric cable leadthrough device and the application surface. In particular, at peripheral flaps of the cable leadthrough device, provided to receive fixing screws and therefore of significant width without nearby support by the application wall (when the cable leadthrough device is mounted without the aid of screws), a lack of adherence between the peripheral flaps and the application wall is observed.

In general, it is always desirable to further improve the sealing against liquids and dust between the elastomeric cable leadthrough device, the application wall and/or the inserted cables.

Ease and precision of mounting to the wall: The insertion of the cable leadthrough device into the opening in the application wall is not easy and rapid, often making it necessary to force and deform the elastomeric material of the outer edge of the cable leadthrough device with the risk of scratches and local tears of the edge. Furthermore, due to the tolerances of dimensions between the opening in the application wall and the outer edge of the cable leadthrough device, and the need for a substantial stretching of the mounted cable leadthrough device (to ensure its planarity and to avoid corrugations along the edges), in case of simple snap engagement (without screws) a certain and stable positioning of the cable leadthrough device in the opening of the wall is not ensured, with the risk of undesired movements.

The object of the present invention is therefore to provide an elastomeric cable leadthrough device having characteristics such as to overcome at least some of the problems of the known art.

Particular objects of the invention include one or more of:
- improving the resistance of the cable leadthrough device against the insertion of dust and humidity between the outer edges of the elastomeric cable leadthrough device and the application wall to which it is mounted,
- improving the sealing to liquids and dust,
- making easier and faster the insertion of the cable leadthrough device into the opening of the application wall,
- ensuring a certain and firm positioning of the cable leadthrough device in the opening of the application wall, resistant to vibrations and stresses, also without fixing screws,
- simplifying the mould for moulding the elastomeric material of the cable leadthrough device,
- making easier the moulding procedure of the cable leadthrough device and the extraction from the mould.

At least some of the objects are achieved by means of a cable leadthrough device according to claim 1.

The dependent claims relate to advantageous and preferred embodiments.

According to an aspect of the invention, a cable leadthrough device (1) comprises:
- a support plate (2) made of elastomeric material, forming a mounting side (4) intended to face an application wall (5) and a visible side (6) opposite the mounting side (4),
- one or more passage seats (7) formed in the support plate (2) and each having a perforable elastomeric wall (12) for the passage of a cable,
- an abutment edge (11) formed integrally with the support plate (2) all around the support plate (2) and intended to abut against the application wall (5),
- an insertion portion (14) of the support plate (2) projecting with respect to the abutment edge (11) towards the mounting side (4),
- a retaining groove (13) formed in the support plate (2) around the insertion portion (14) and intended to embrace an edge (16) of the application wall (5),

wherein the abutment edge (11) forms a frame consisting of two first portions of the abutment edge (11') opposite and parallel to each other and having a first width (W11') and two second portions of the abutment edge (11") opposite and parallel to each other, transverse to the first portions of the abutment edge (11'), and having a second width (W11"),

wherein the second width (W11") is greater than the first width (W11') and each said second portion of the abutment edge (11") forms a plate curved or inclined with respect to the support plate (2) towards the mounting side (4).

The second portions of the abutment edge (11") can be used for screwing the cable leadthrough device (1) against the application wall (5) and/or form visibly marked and perforable or penetrable screw passage seats (18) for receiving fixing screws (19) for fixing the cable leadthrough device (1) to the application wall (5).

When the cable leadthrough device (1) is not screwed to the application wall (5) but only engaged with the mounting opening (15), thanks to the inclination of the second portion of the abutment edge (11") towards the mounting side (4), a gap is not formed between the application wall (5) and the abutment edge (11) (which would favour an ingress of dust and humidity), but rather an elastically preloaded adherence along substantially the entire abutment edge (11).

In order to better understand the invention and to appreciate its advantages, some exemplary, non-limiting embodiments will be described hereinafter, with reference to the figures, wherein:
Figure 1 is a front perspective view ("visible side") of a cable leadthrough device according to an embodiment,
Figure 2 is a rear perspective view ("mounting side") of the cable leadthrough device of figure 1,
Figure 3 is a front view - from the visible side - of the cable leadthrough device of figure 1,
Figure 4 is a side view of the cable leadthrough device of figure 1,
Figure 5 is a sectional view according to the section plane V-V in figure 3,
Figure 6 is an enlargement of detail VI in figure 5,
Figure 7 is a top view of the cable leadthrough device of figure 1,
Figure 8 is a sectional view according to the section plane VIII-VIII in figure 3,
Figure 9 is an enlargement of detail IX in figure 7,
Figures 10 and 11 are enlarged views of the detail in figure 6 according to two different embodiments,
Figure 12 is a sectional view according to the section plane XII-XII in figure 3,

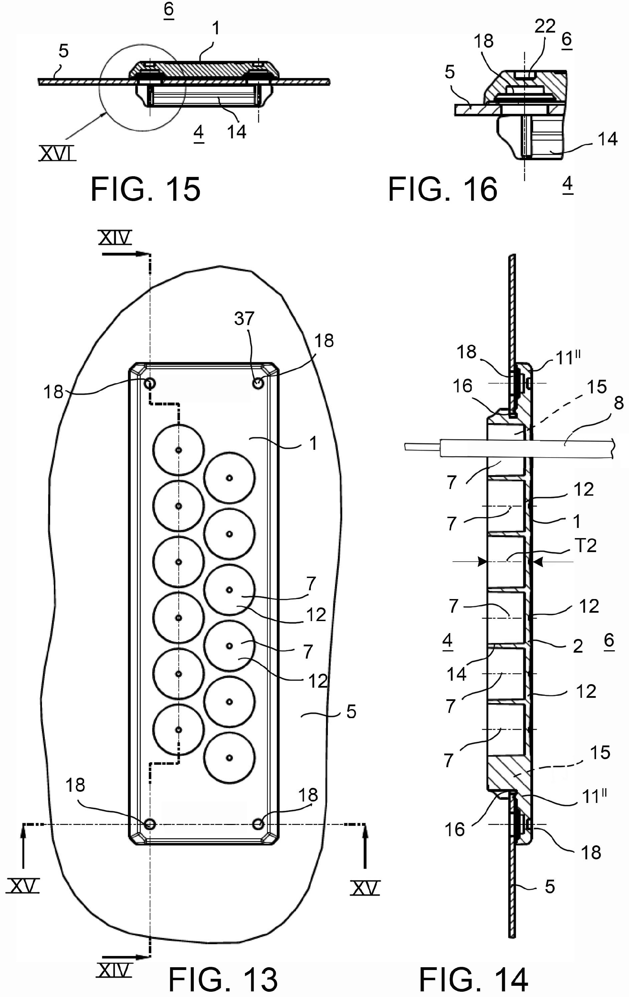

Figures 13, 14, 15, 16 illustrate the cable leadthrough device in a mounted configuration without screws, wherein:
   Figure 14 is a sectional view according to the section plane XIV-XIV in figure 13,
   Figure 15 is a sectional view according to the section plane XV-XV in figure 13,
   Figure 16 is an enlargement of detail XVI in figure 15,

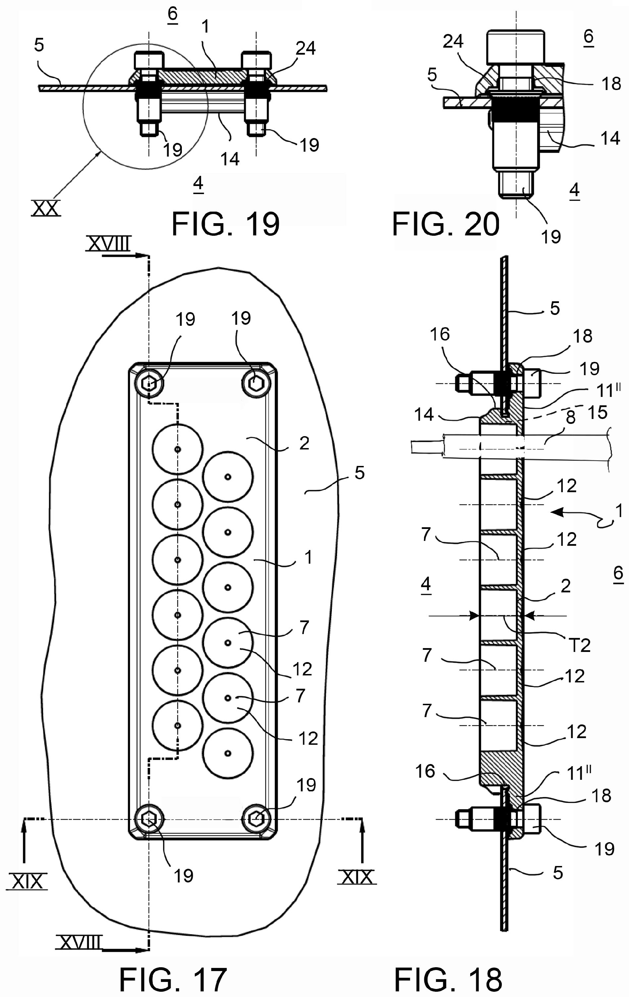

   Figures 17, 18, 19, 20 illustrate the cable leadthrough device in a mounted configuration with screws, wherein:
      Figure 18 is a sectional view according to the section plane XVIII-XVIII in figure 17,
      Figure 19 is a sectional view according to the section plane XIX-XIX in figure 17,
      Figure 20 is an enlargement of detail XX in figure 19.

### Description of embodiments

With reference to the figures, a multiple cable leadthrough device 1 (that is to say suitable for implementing a sealed passage of one or a plurality of cables 8 or conduits (not shown) through an application wall 5) comprises a support plate 2 made of elastomeric material, forming a mounting side 4 intended to face an application wall 5 and a visible side 6 opposite the mounting side 4.

The cable leadthrough device 1 further comprises one or more cable passage seats 7 formed in the support plate 2 and each having a perforable elastomeric wall 12 for the passing through of a cable 8 and which:
- in an unperforated configuration hermetically closes a passage from the visible side 6 to the mounting side 4 through the cable passage seat 7, and
- is perforable (for example breakable by means of a screwdriver or a termination of the electric cable 8) to allow the insertion of the cable 8 through the cable passage seat 7 in a cable passage direction 9, transverse to a plate plane 10 of the support plate 2. The plate plane is to be understood as a reference plane in which the support plate 2 is oriented, without the support plate 2 itself necessarily having to be of perfectly planar shape.

The cable leadthrough device 1 further comprises an abutment edge 11 formed integrally with the support plate 2 all around the support plate 2 and intended to abut against the application wall 5 in the cable passage direction 9,

The cable leadthrough device 1 further comprises an insertion portion 14 formed by the support plate 2 and projecting with respect to the abutment edge 11 towards the mounting side 4. The insertion portion 14 is intended to be inserted into a mounting opening 15 formed in the application wall 5.

The cable leadthrough device 1 further comprises a retaining groove 13 formed in the support plate 2 around the insertion portion 14 and intended to embrace an edge 16 of the application wall 5 delimiting the mounting opening 15.

### Description of the abutment edge 11

The abutment edge 11 forms a frame, preferably rectangular (but with rounded outer corners), consisting of two first portions of the abutment edge 11' (preferably rectilinear) opposite and parallel to one another and having a first width W11' and two second portions of the abutment edge 11" (preferably rectilinear) opposite and parallel to one another, transverse or perpendicular to the first portions of the abutment edge 11', and having a second width W11", which form the four sides of the frame.

The second width W11" is greater than the first width W11' and each said second portion of the abutment edge 11" forms a plate curved or inclined with respect to the support plate (2) towards the mounting side (4).

The second portions of the abutment edge 11" can be used for screwing the cable leadthrough device 1 against the application wall 5 and/or form dedicated screw passage seats 18 visibly marked and perforable or penetrable for receiving fixing screws 19 for fixing the cable leadthrough device 1 to the application wall 5.

Thanks to the inclination of the second portion of the abutment edge 11" (the wider one) towards the mounting side 4, when the cable leadthrough device 1 is only engaged with the mounting opening 15, a gap is not formed between the application wall 5 and the abutment edge 11, but rather an elastically preloaded adherence along substantially the entire abutment edge (11). In synergy with the inclination of the second portions of the abutment edge 11" (wider), the first portions of the abutment edge 11' (not intended for fixing by means of screws) are retained abutting against the application wall 5 thanks to their reduced first width W11' and, therefore, smaller distance from the engagement region between the retaining groove 13 and the edge 16 of the application wall 5.

The first width W11' and the second width W11" are measured in a direction parallel to the plate plane 10 and orthogonal to the (peripheral) extension of the abutment edge 11 as shown in the figures.

According to an embodiment, the second portions of the abutment edge 11" are plate-shaped and planar. This simplifies the modelling of the three-dimensional shape and the making of the mould for forming the cable leadthrough device by injection moulding of elastomeric material.

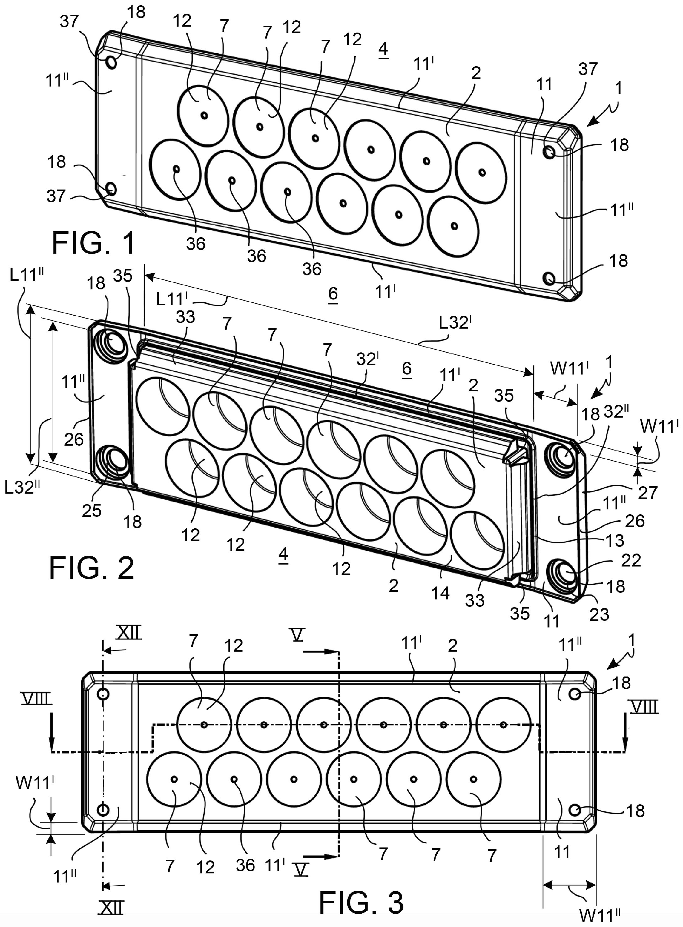

According to an embodiment, the second portions of the abutment edge 11" have a second (peripheral) length L11" lower than a first peripheral length L11' of the first portions of the abutment edge 11' **(****Figure 2****).** In the case of a rectangular shape of the cable leadthrough device 1, the screw passage seats 18 are therefore formed on the short sides of the abutment edge 11 and the long sides of the abutment edge 11 can be made narrower, saving material and reducing the weight of the cable leadthrough device 1.

According to an embodiment, the support plate 2 forms a central region 20 substantially planar on the visible side 6 (with the exception of possible markings 36 that indicate programmed perforation/breaking positions, in slight low/high relief). The central region 20 forms all the cable passage seats 7 and the second portions of the abutment edge 11" are connected to the central region 20 along a straight folding line 21 **(****Figures 1****,** **7, 9****).**

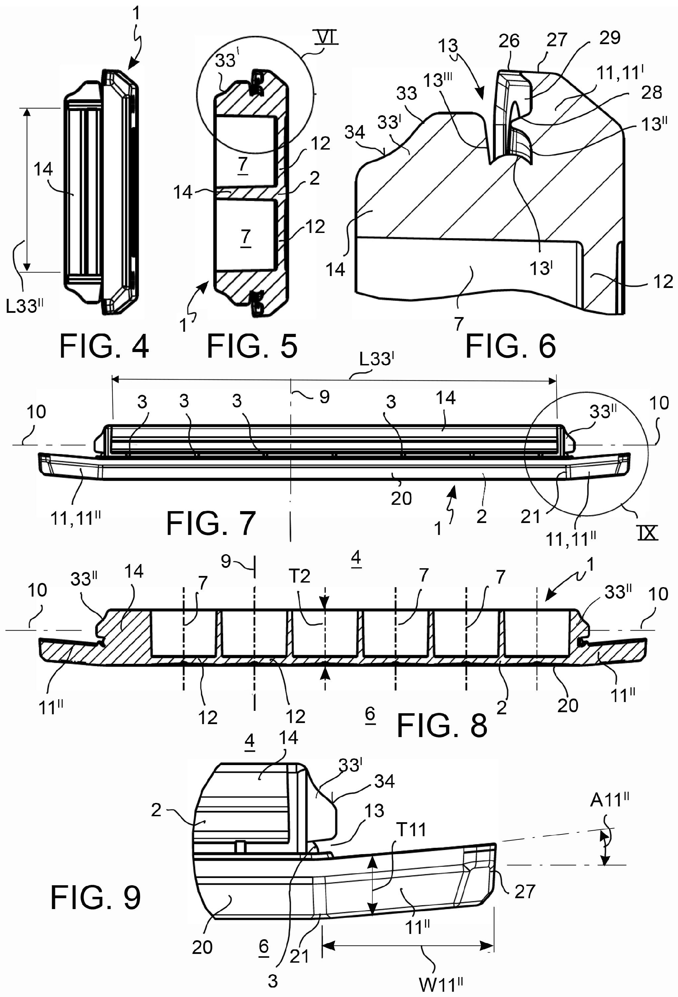

According to an embodiment, the second portions of the abutment edge 11" are inclined with respect to the support plate 2 or with respect to the central region 20 by an angle of inclination A11" between 3° and 15° or 8°, preferably 5° **(****Figure 9****).**

According to an embodiment, the first width W11' is constant along the entire first (peripheral) extension L11' and the second width W11" is constant along the entire second (peripheral) extension L11". The first width W11' is less than or equal to half the second width W11".

The abutment edge 11 has an abutment thickness T11 in the cable passage direction 9 less than half and greater than one third of a total plate thickness T2 in the cable passage direction 9.

According to an embodiment, the abutment edge 11 forms an outer sealing edge 26 extending along an outer free end 27 of the abutment edge 11 all around the cable leadthrough device 1 and projecting towards the mounting side 4 **(****Figures 6****,** **10, 11****).** The outer sealing edge 26 performs the function of an anti-dust and anti-droplet barrier.

According to a further refinement, the abutment edge 11 further forms an inner sealing lip 28, in a retracted position with respect to the outer sealing edge 26, for example extending at the entrance of the retaining groove 13, all around the support plate 2 and projecting towards the mounting side 4 **(****Figures 6****,** **10, 11****).** The inner sealing lip 28 performs a further anti-liquid and anti-vapour barrier function.

Between the outer sealing edge 26 and the inner sealing lip 28, the abutment edge 11 forms a discharge groove 29, also extending all around the support plate 2 and open/facing towards the mounting side 4. The discharge groove 29 allows the elastic deformations necessary so that the outer sealing edge 26 and the inner sealing lip 28 can adhere continuously against the application wall 5.

It is significant to note that the discharge groove 29 is free of undercut (in cross-section, **Figures 6****,** **10, 11****),** in other words: two lateral flanks of the discharge groove 29 forming flanks of the outer sealing edge 26 and of the inner sealing lip 28 are divergent in the direction towards the mounting side 4. Furthermore, an inner flank of the discharge groove 29 forming an outer flank of the inner sealing lip 28 has an inclination in the insertion direction of the edge 16 of the mounting opening 15 in the retaining groove 13. This is advantageous both for the moulding process and for the extraction of the device 1 from the injection mould, and for the sealing function.

According to an embodiment, the inner sealing lip 28 projects towards the mounting side 4 beyond the outer sealing edge 26. The inner sealing lip 28 has a height H28 measured from a bottom of the discharge groove 29 in the cable passage direction 9 greater than 0.7 mm, preferably from 0.8 mm to 2 mm or to 1.2 mm, advantageously 1 mm.

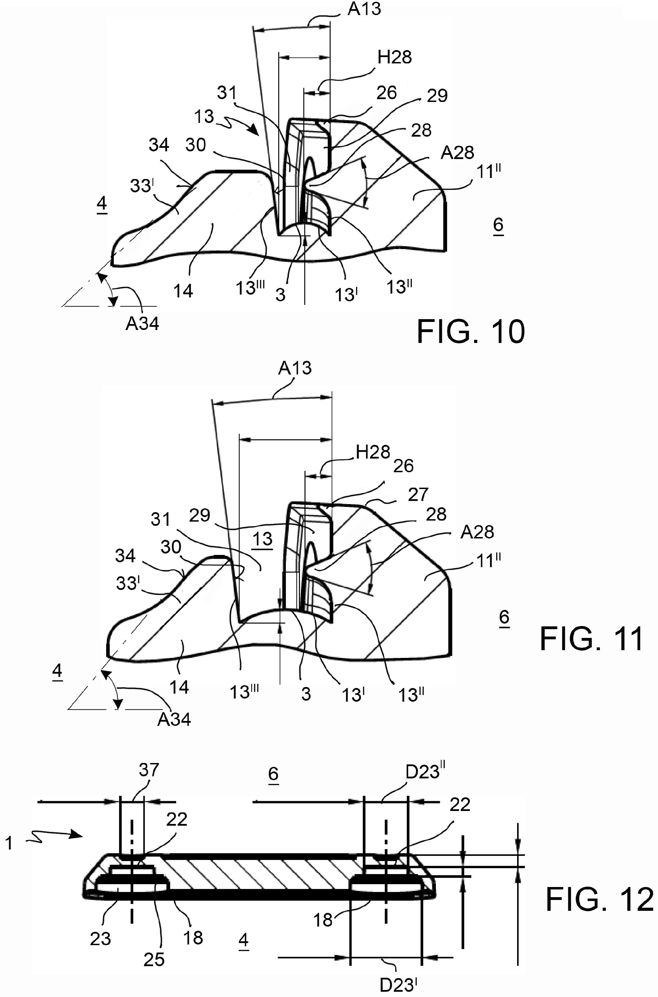

The inner sealing lip 28 advantageously has a convergence angle A28 comprised between 30° and 60°, preferably between 38° and 45°, advantageously 40° **(****Figures 10****, 11).**

According to an embodiment, each of the two second portions of the abutment edge 11" forms respectively 2 said screw passage seats 18 each having:

a perforable wall 22 on the visible side 6 intended to be penetrated by the fixing screw 19 from the visible side 6 towards the mounting side 4, and

a circular cavity 23 on the mounting side 4 for accommodating the shank of the screw and a generic spacer insert 24, in particular a rivet head or a flange of a rivet or internally threaded bush, applicable to a corresponding hole in the application wall 5,

possibly, a programmed perforation marking 37, for example a raised circle on the visible side 6.

According to an embodiment, the circular cavity 23 can form an inner step 25 that delimits between one another two cavity portions with different inner diameters D23', D23", for receiving the shank of the screw 19 and the spacer insert 24 having different sizes (D23" is the passage diameter for the screw 19, D23' is the receiving diameter of the head of the rivet or generic spacer insert 24). For example, the circular cavity 23 and/or the cavity portions can have an inner diameter of D23' = 9 mm and of D23" = 5 mm **(****Figure 12****).**

### Description of the retaining groove 13

The retaining groove 13 extends parallel to the plate plane 10 and is open in a direction parallel to the plate plane 10 towards the outside of the insertion portion 14.

The retaining groove 13 is delimited by:
- a bottom 13'
- a first flank 13" extending from the bottom 13' towards the outside of the support plate 2 to form an abutment surface of the abutment edge 11, and
- a second flank 13‴ opposite the first flank 13" and extending from the bottom 13' towards the outside of the support plate 2 to form a barb surface 30.

According to an embodiment, the first flank 13" is curved towards the mounting side 4, creating a local narrowing 31 at the entrance of the retaining groove 13 and, preferably, ending in or forming an inner flank of the (or of a generic) inner sealing lip 28 **(****Figures 6****,** **10, 11****).**

According to an embodiment, the second flank 13‴ is at least in sections or continuously substantially planar (or rectilinear in cross-section, **Figures 6****,** **10, 11****)** and inclined towards the mounting side 4. This facilitates the release of the device 1 from the injection mould and, in addition, prevents an undesired closure of the retaining groove 13 during the pressure introduction of the insertion portion 14 into the mounting opening 15 and the consequent tendency of the first flank 13" to approach the second flank 13"'.

According to an embodiment, the second flank 13‴ and the opposite abutment surface (without considering the inner lip 28, **Figures 10****, 11)** define an opening angle A13 comprised between 5° and 10°, advantageously 7°.

According to an embodiment, the retaining groove 13 has a substantially rectangular shape and/or consists of two first portions of the retaining groove 32' (preferably rectilinear) opposite and parallel to one another and two second portions of the retaining groove 32" (preferably rectilinear) opposite and parallel to one another, transverse or perpendicular to the first portions of the retaining groove 32'. Advantageously, at four corners between the respective first portions of the retaining groove 32' and second portions of the retaining groove 32", the first flank 13" is continuous and uninterrupted whereas the second flank 13‴ is interrupted **(****Figure 2****).** This considerably simplifies the geometry of the injection mould and facilitates the release of the product from the mould, without however worsening the sealing, thanks to the continuity of both the outer sealing edge 26 and the inner sealing lip 28.

According to an embodiment, the first portions of the retaining groove 32' have a first (peripheral) length L32' greater than a second (peripheral) length L32" of the second portions of the retaining groove 32" **(****Figure 2****).**

The second portions of the retaining groove 32" are parallel to the second portions of the abutment edge 11" and the first portions of the retaining groove 32' are parallel to the first portions of the abutment edge 11' **(****Figure 2****).**

According to an embodiment, the bottom 13' of the retaining groove 13 forms a plurality of discrete, localised projections 3, preferably at least one or more projections 3 in each of the first portions of the retaining groove 32' and in each of the second portions of the retaining groove 32" to implement discrete and certain abutments against the edge 16 of the mounting opening 15. This allows a certain elastic engagement of the cable leadthrough device 1 in the directions parallel to the plate plane 10, but with only localised deformations of only the discrete projections 3 and without global deformations of the support plate 2 in the plate plane 10.

### Description of the insertion portion 14

According to an embodiment, the insertion portion 14 has an outer edge 33 extending from the mounting side 4 up to the retaining groove 13 and along the retaining groove 13 all around the insertion portion 14. The outer edge 33 forms one or more ramp portions 33', 33" that taper towards the mounting side 4, forming an insertion lead-in to make easier the introduction of the insertion portion 14 into the mounting opening 15.

According to an embodiment, the ramp portions 33', 33"' form a ramp surface 34 curved and concave, such as to define a increasing ramp rising angle A34, going from the mounting side 4 towards the retaining groove 13 **(****Figures, 10****, 11).**

This particular geometry implements, together with the elastomeric properties of the material of the cable leadthrough device 1, a perceptible snap insertion with distinct steps of introduction under pressure and of receiving and extension of the insertion portion 14 in the mounting hole 15.

Advantageously, at corners of the outer edge 33 the ramp portions 33', 33" are not continuous, but interrupted, determining a corner relief 35 in the outer edge 33 (directly communicating with the bottom 13' of the retaining groove 13, **Figure 2****)** which simplifies the making of the injection mould and allows local deformations of the ramp portions 33', 33" which facilitate the snap insertion of the insertion portion 14 into the mounting opening 15.

According to an embodiment, the outer edge 33 is substantially rectangular and the ramp portions 33', 33" comprise two first ramp portions 33' opposite, rectilinear and parallel to one another, and two second ramp portions 33" opposite, rectilinear and parallel to one another, as well as transverse or orthogonal to the first ramp portions 33'.

According to an embodiment, the second ramp portions 33" have a second (peripheral) length L33" lower than a first peripheral length L33' of the first ramp portions 33' **(****Figures 2****,** **4, 7****).**

The second ramp portions 33" are parallel to the second portions of the abutment edge 11" and the first ramp portions 33' are parallel to the first portions of the abutment edge 11' **(****Figure 2****).**

According to an embodiment, the cable passage seats 7 form cavities, for example cylindrical, open on the mounting side 4 and (at least initially) closed on the visible side 6 by means of the perforable walls 22.

The perforable walls have a programmed perforation marking 36, for example a raised circle, on the visible side 6.

The cable leadthrough device 1 is made as a monoblock and single-material component.

The cable leadthrough device is made of elastomeric material, for example selected in the group of:
Thermoplastic elastomer (TPE)
Natural rubber (NR)
Styrene-butadiene rubber (SBR)
Nitrile rubber (NBR or Buna-N)
Neoprene (CR)
EPDM rubber (ethylene propylene diene monomer)
Silicone rubber (VMQ)
Vulcanized thermoplastic elastomer (TPV or TPE-V).

### Reference numerals

cable leadthrough device 1
support plate 2
discrete projections 3
plate thickness T2
mounting side 4
application wall 5
visible side 6
cable passage seats 7
cable 8
cable passage direction 9
plate plane 10
abutment edge 11
first portions of the abutment edge 11'
second portions of the abutment edge 11"
first width W11'
second width W11"
first (peripheral) length L11'
second (peripheral) length L11"
angle of inclination A11"
abutment thickness T11
perforable elastomeric wall 12
retaining groove 13
bottom 13'
first flank 13"
second flank 13‴
opening angle A13
insertion portion 14
mounting opening 15
edge 16
screw passage seats 18
fixing screws 19
central region 20
folding line 21
perforable wall 22 of the screw passage seat
circular cavity 23
inner diameters D23', D23"
spacer insert 24
inner step 25
outer sealing edge 26
outer free end 27
inner sealing lip 28
height H28
convergence angle A28
discharge groove 29
barb surface 30
local narrowing 31 of the retaining groove
first portion of the retaining groove 32'
second portion of the retaining groove 32"
first length L32'
second length L32"
outer edge 33
first ramp portion 33'
second ramp portion 33"
first ramp length L33'
second ramp length L33"
ramp surface 34
ramp rising angle A34
corner relief 35
cable perforation marking 36
screw perforation marking 37

## Claims

1. Cable leadthrough device (1) comprising:
- a support plate (2) made of elastomeric material, forming a mounting side (4) intended to face an application wall (5) and a visible side (6) opposite the mounting side (4),
- one or more passage seats (7) formed in the support plate (2) and each having a perforable elastomeric wall (12) for the passage of a cable,
- an abutment edge (11) formed integrally with the support plate (2) all around the support plate (2) and intended to rest against the application wall (5),
- an insertion portion (14) of the support plate (2) projecting with respect to the abutment edge (11) towards the mounting side (4),
- a retaining groove (13) formed in the support plate (2) around the insertion portion (14) and intended to embrace an edge (16) of the application wall (5),
wherein the abutment edge (11) forms a frame consisting of two first portions of the abutment edge (11') opposite and parallel to each other and having a first width (W11') and two second portions of the abutment edge (11") opposite and parallel to each other and transverse to the first portions of the abutment edge (11'), and having a second width (W11"),
wherein the second width (W11") is greater than the first width (W11') and each said second portion of the abutment edge (11") forms a plate curved or inclined with respect to the support plate (2) towards the mounting side (4).

2. Cable leadthrough device (1) according to claim 1, wherein the second portions of the abutment edge (11") are planar and wherein the second portions of the abutment edge (11") have a second length (L11") less than a first length (L11') of the first portions of the abutment edge (11').

3. Cable leadthrough device (1) according to one of the preceding claims, wherein:
- the support plate (2) forms a central region (20) substantially planar on the visible side (6) and forming all the cable passage seats (7),
- the second portions of the abutment edge (11") are connected to the central region (20) along a straight folding line (21),
- the second portions of the abutment edge (11") are inclined with respect to the central region (20) by an angle of inclination (A11") between 3° and 15°, or 5°.

4. Cable leadthrough device (1) according to one of the preceding claims, wherein the abutment edge (11) forms:
- an outer sealing edge (26) extending along an external free end (27) of the abutment edge (11) all around the cable leadthrough device (1) and projecting towards the mounting side (4),
- an internal sealing lip (28), in a retracted position with respect to the outer sealing edge (26), or extending at the entrance of the retaining groove (13), all around the support plate (2) and projecting towards the mounting side (4), wherein between the outer sealing edge (26) and the internal sealing lip (28), the abutment edge (11) forms a discharge groove (29), also extending all around the support plate (2) and facing towards the mounting side (4).

5. Cable leadthrough device (1) according to claim 4, wherein:
- the discharge groove (29) is free of undercut,
- two lateral flanks of the discharge groove (29) are formed by flanks of the outer sealing edge (26) and of the internal sealing lip (28) and are divergent in the direction towards the mounting side (4),
- one of the two lateral flanks of the discharge groove (29), forming an external flank of the internal sealing lip (28), has an inclination in an insertion direction of an edge (16) of the mounting opening (15) in the retaining groove (13).

6. Cable leadthrough device (1) according to claim 4 or 5, wherein:
- the internal sealing lip (28) projects towards the mounting side (4) beyond the outer sealing edge (26),
- the internal sealing lip (28) has a height (H28) measured from a bottom of the discharge groove (29) in the direction towards the mounting side (4) greater than 0.7mm, or from 0.8mm to 2mm, or 1mm.

7. Cable leadthrough device (1) according to one of claims 4 to 6, wherein the internal sealing lip (28) has a convergence angle (A28) in the range between 30° and 60°, or between 38° and 45°, or 40°.

8. Cable leadthrough device (1) according to claim 1, wherein the second portions of the abutment edge (11") are usable for screwing the cable leadthrough device (1) against the application wall (5) and form visibly marked and penetrable screw passage seats (18) for receiving fixing screws (19), wherein each of the two second portions of the abutment edge (11") forms respectively 2 said screw passage seats (18) each having:
- a perforable wall (22) on the visible side (6) intended to be penetrated by a fixing screw (19) from the visible side (6) towards the mounting side (4), and
- a circular cavity (23) on the mounting side (4) for accommodating a spacer insert (24) applied to a corresponding hole in the application wall (5),
- a programmed perforation marking (37) or a raised circle on the visible side (6).

9. Cable leadthrough device (1) according to claim 8, wherein the circular cavity (23) forms an internal step (25) that delimits two cavity portions with different internal diameters (D23', D23") or with internal diameter of D23' = 9 mm and of D23" = 5 mm.

10. Cable leadthrough device (1) according to one of the preceding claims, wherein the retaining groove (13) extends parallel to the plate plane (10) and is open in a direction parallel to the plate plane (10) towards the outside of the insertion portion (14), wherein the retaining groove (13) is delimited by:
- a bottom (13'),
- a first flank (13") extending from the bottom (13') towards the outside of the support plate (2) to form a abutment surface of the abutment edge (11), and
- a second flank (13‴) opposite the first flank (13") and extending from the bottom (13') towards the outside of the support plate (2) to form a barb surface (30),
wherein the first flank (13") is curved towards the mounting side (4), creating a local narrowing (31) at the entrance of the retaining groove (13) and forming a flank of the internal sealing lip (28).

11. Cable leadthrough device (1) according to claim 10, wherein the second flank (13‴) is at least in sections or continuously substantially planar and inclined towards the mounting side (4), wherein the second flank (13‴) and the opposite abutment surface define an opening angle (A13) comprised between 5° and 10°.

12. Cable leadthrough device (1) according to one of claims 10 to 11, wherein the retaining groove (13) has a substantially rectangular shape and consists of:
two first portions of the retaining groove (32') which are rectilinear, opposite and parallel to each other, and
two second portions of the retaining groove (32") which are rectilinear, opposite and parallel to each other and perpendicular to the first portions of retaining groove (32'),
wherein, at four corners between the respective first portions of the retaining groove (32') and second portions of the retaining groove (32"), the first flank (13") is continuous and uninterrupted while the second flank (13‴) is interrupted, wherein the bottom (13') of the retaining groove (13) forms a plurality of discrete, localized projections (3).

13. Cable leadthrough device (1) according to claim 12, wherein the bottom (13') of the retaining groove (13) forms a plurality of said projections (3) positioned in each of the first portions of the retaining groove (32') and in each of the second portions of the retaining groove (32").

14. Cable leadthrough device (1) according to one of the preceding claims, wherein the insertion portion (14) has an outer edge (33) extending from the mounting side (4) up to the retaining groove (13) and along the retaining groove (13), wherein the outer edge (33) forms one or more ramp portions (33', 33") that taper towards the mounting side (4),
wherein:
- the ramp portions (33', 33‴) form a ramp surface (34) curved and concave, such as to define a ramp rising angle (A34) which increases going from the mounting side (4) towards the retaining groove (13), and/or
- at corners of the outer edge (33) the ramp portions (33', 33") are not continuous, but interrupted, determining a corner relief (35) in the outer edge (33).

15. Cable leadthrough device (1) according to any of the preceding claims, made in a single piece and of a single-material comprising one or more of:
thermoplastic elastomer (TPE), natural rubber (NR), styrene-butadiene rubber (SBR), nitrile rubber (NBR or Buna-N), neoprene (CR), EPDM rubber (ethylene propylene diene monomer), silicone rubber (VMQ), vulcanized thermoplastic elastomers (TPV or TPE-V).
